# EUROPÄISCHE PATENTSCHRIFT

(11) **EP 2 490 813 B1**
(45) Veröffentlichungstag und Bekanntmachung des Hinweises auf die Patenterteilung: **22.04.2020**
(21) Anmeldenummer: 10765376.8
(22) Anmeldetag: 25.09.2010
(51) Int. Cl.: B01L 3/02, G01N 35/10, G01F 23/26, G01F 23/02

(54) **ELEKTRISCH LEITFÄHIGE PIPETTENSPITZE**
ELECTRICALLY CONDUCTIVE PIPETTE TIP
POINTE DE PIPETTE ÉLECTROCONDUCTRICE

(30) Priorität: 19.10.2009 DE 102009049783
(43) Veröffentlichungstag der Anmeldung: 29.08.2012
(73) Patentinhaber: Eppendorf AG, 22339 Hamburg (DE)
(72) Erfinder: BLUMENTRITT, Michael, 22453 Hamburg (DE); GÜLZOW, Nico, 22337 Hamburg (DE); REIMANN, Thomas, 21502 Geesthacht (DE); ZIEGMANN, Christian, 22926 Ahrensburg (DE); HAAK, Matthias, 23758 Oldenburg (DE)
(74) Vertreter: Hauck Patentanwaltspartnerschaft mbB
(86) Internationale Anmeldenummer: PCT/EP2010/005878
(87) Internationale Veröffentlichungsnummer: WO 2011/047771

(56) Entgegenhaltungen:
- EP-A1- 1 821 106
- WO-A1-2009/045343
- DE-A1- 3 905 622
- DE-A1- 4 402 654
- US-A1- 2001 047 692
- US-A1- 2003 141 392

## Beschreibung

Die Erfindung bezieht sich auf eine elektrisch leitfähige Pipettenspitze.

Pipettenspitzen werden zusammen mit Pipetten zum Dosieren von Flüssigkeiten verwendet. Pipettenspitzen haben einen länglichen, rohrförmigen Körper, der am unteren Ende eine untere Öffnung für den Durchgang von Flüssigkeit und am oberen Ende eine obere Öffnung für den Durchgang von Luft und einen Durchgangskanal zwischen der unteren Öffnung und der oberen Öffnung aufweist. Pipettenspitzen werden lösbar mit einer Pipette verbunden. Hierfür werden sie herkömmlicherweise mit der oberen Öffnung auf einen Aufnahmeschaft am unteren Ende der Pipette aufgeklemmt oder mit dem oberen Ende in eine Sackbohrung am unteren Ende der Pipette eingeklemmt. Der Aufnahmeschaft hat am unteren Ende bzw. die Sackbohrung am oberen Ende eine Durchgangsöffnung für Luft, die über einen Verbindungskanal mit einer Verdrängungseinrichtung für Luft verbunden ist. Die Verdrängungseinrichtung ist zumeist als Kolben-Zylinder-Einheit ausgeführt.

Mittels der Verdrängungseinrichtung wird eine Luftsäule verlagert, um Flüssigkeit in die auf den Aufnahmeschaft aufgeklemmte oder in die Sackbohrung eingeklemmte Pipettenspitze einzusaugen und aus dieser auszustoßen. Ist die Pipettenspitze mit der unteren Öffnung in eine Flüssigkeit eingetaucht, so wird durch den Aufnahmehub der Verdrängungseinrichtung die Luftsäule von der unteren Öffnung weg verlagert und Flüssigkeit in die Pipettenspitze eingesogen. Durch den Abgabehub der Verdrängungseinrichtung wird die Luftsäule zur unteren Öffnung hin verlagert und Flüssigkeit aus der unteren Öffnung der Pipettenspitze ausgestoßen. Die aufgenommene und abgegebene Flüssigkeitsmenge hängt vom Hub der Verdrängungseinrichtung ab. Bekannt sind Festvolumenpipetten mit unveränderlichem Hub und variable Pipetten mit einstellbarem Hub.

Die Verdrängungseinrichtung kann manuell und/oder motorbetrieben sein. Ferner kann die Pipette handhabbar sein und/oder stationär betrieben werden. Insbesondere kann die Pipette in eine Dosierstation oder Workstation integriert sein.

Pipettenspitzen für Einmalgebrauch werden aus Kunststoff hergestellt, insbesondere aus Polypropylen.

Beim Aufnahmehub muss die Pipettenspitze permanent in Flüssigkeit eingetaucht sein, um Fehldosierungen durch Ansaugen von Luft zu vermeiden. Zur Kontrolle, ob eine Pipettenspitze in Flüssigkeit eingetaucht ist, gibt es bereits Pipettenspitzen aus elektrisch leitfähigem Kunststoff, beispielsweise Pipettenspitzen der LiHa Disposable Tips-Serie (Firma TECAN AG, Männedorf, Schweiz).

Für den Gebrauch elektrisch leitfähiger Pipettenspitzen gibt es Pipetten mit einer elektronischen Einrichtung, die eine aufgesteckte Pipettenspitze kontaktiert und durch Kapazitätsmessung ermittelt, ob die Pipettenspitze in Flüssigkeit eingetaucht ist. Vielfach sind Pipetten in automatisch arbeitenden Dosierstationen oder Workstations mit einer derartigen Einrichtung ausgerüstet. Grundsätzlich können aber auch andere stationäre oder handhabbare Pipetten entsprechend ausgerüstet sein.

Herkömmlicherweise werden elektrisch leitfähige Pipettenspitzen aus einem elektrisch leitfähigen Polypropylen-Compound mit Leitruß hergestellt. Infolgedessen sind elektrisch leitfähige Pipettenspitzen schwarz und lichtundurchlässig. Deshalb kann der Anwender beim Gebrauch nicht visuell überprüfen, ob die Pipettenspitze Flüssigkeit enthält oder nicht. Außerdem sind die Kosten elektrisch leitfähiger Pipettenspitzen verhältnismäßig hoch, da ein Rußanteil verarbeitet werden muss.

Aus US 6 551 558 B1 ist eine Flüssigkeitstransfervorrichtung mit einer Kanüle aus konzentrischen Röhrchen aus Metall oder leitfähigem Kunststoff mit einer Isolierung dazwischen für die Detektion des Eintauchens in Flüssigkeit bekannt. Die Röhrchen aus Metall oder leitfähigem Kunststoff sind undurchsichtig.

Aus der US 2005/0064578 A1 ist eine Küvette bekannt, die in einander gegenüberliegenden Wänden Elektroden hat, die einen Kondensator für die Elektroporation bilden. Die Küvette ist im Zweikomponenten-Spritzgießverfahren hergestellt.

Die US 5 660 797 beschreibt eine Pipettenspitze, die aus verschiedenen Materialien besteht. Insbesondere kann sie an der Innenseite eines Kragens aus einem Material bestehen, das weicher als der Kunststoff der übrigen Pipettenspitze ist, um die Abdichtung zu verbessern, wenn die Pipettenspitze mit ihrer oberen Öffnung reibschlüssig an einer Pipette festsitzt.

Die EP 1 607 747 A2 beschreibt eine Pipettenspitze, die für eine kapazitive Flüssigkeitsstandmessung zwei elektrisch leitfähige Bereiche an der Außenseite hat, die einen Kondensator bilden. Die Kapazität des Kondensators verändert sich mit der aufgenommenen Flüssigkeitsmenge.

Die DE 44 02 654 A1 offenbart einen Dispenser mit einer durch Siebdruck aufgebrachten streifenförmigen Elektrode aus einem Leitlack.

Die US 5 045 286 beschreibt eine Vorrichtung zur Aufnahme einer bestimmten Menge Flüssigkeit, die zwei Elektroden aufweist, die durch elektrisch leitfähige Bereiche eines in ihre obere Öffnung einpressbaren Sitzes kontaktiert ist. Die Vorrichtung ist durch Spritzgießen hergestellt.

Die DE 39 05 622 A1 beschreibt eine Pipettenspitze mit leitfähigen Bereichen bestehend aus streifenförmigen, leitfähigen Kunststoffteilen und die streifenförmigen, leitfähigen Kunststoffteile zwischen sich sandwichartig einschließenden isolierenden Kunststoffteilen.

Die US 2003/0141392 A1 beschreibt ein Röhrchen für das Elektro-Sprühverfahren, das ganz oder teilweise mit leitfähigem Polymer beschichtet ist.

Die EP 1 821 106 A1 beschreibt eine einen spitzenförmigen Behälter mit einer Aufstecköffnung und ein enges Röhrchen mit einer Flüssigkeitsöffnung umfassende Spitze, wobei die Außenseite des engen Röhrchens mit einer leitfähigen dünnen Schicht mit einem bestimmten Widerstand beschichtet ist. Durch Anlegen eines elektrischen Stromes an die leitfähige dünne Schicht soll das Röhrchen auf eine bestimmte Temperatur aufgeheizt werden.

Davon ausgehend liegt der Erfindung die Aufgabe zugrunde, eine elektrisch leitfähige Pipettenspitze mit günstigeren Anwendungseigenschaften zur Verfügung zu stellen. Insbesondere ist es Aufgabe der Erfindung, eine elektrisch leitfähige Spitze bereitzustellen, die eine visuelle Inspektion des Flüssigkeitsstandes erlaubt und die Kontaktierung der Flüssigkeit und/oder eines Kontaktes an einer Dosiervorrichtung unabhängig von der Ausrichtung der Pipettenspitze sicherstellt.

Die Aufgabe wird durch eine leitfähige Pipettenspitze mit den Merkmalen des Anspruchs 1 gelöst. Vorteilhafte Ausgestaltungen der Pipettenspitze sind in den Unteransprüchen angegeben.

Gemäß Anspruch 1 hat eine elektrisch leitfähige Pipettenspitze einen länglichen, rohrförmigen Körper, der am unteren Ende eine untere Öffnung für den Durchgang von Flüssigkeit und am oberen Ende eine obere Öffnung für den Durchgang von Luft und einen Durchgangskanal zwischen der unteren Öffnung und der oberen Öffnung aufweist, und ist dadurch gekennzeichnet, dass der Körper einen zusammenhängenden und sich in Längsrichtung des rohrförmigen Körpers erstreckenden, elektrisch leitfähigen Bereich aus einer elektrisch leitfähigen ersten Kunststoffkomponente und mindestens einen lichtdurchlässigen Bereich aus einer zweiten Kunststoffkomponente aufweist, der sich vom Durchgangskanal bis zur Außenseite des Körpers erstreckt, und der Körper im Mehrkomponenten-Spritzgießverfahren hergestellt ist.

Die Leitfähigkeit der erfindungsgemäßen Pipettenspitze ist dadurch sichergestellt, dass ihr Körper mindestens einen zusammenhängenden und sich in Längsrichtung des rohrförmigen Körpers erstreckenden, elektrisch leitfähigen Bereich aus einer ersten Kunststoffkomponente aufweist. Infolgedessen kann vom eingetauchten unteren Ende bis zum oberen Ende des elektrisch leitfähigen Bereichs der Pipettenspitze, die mit einer Pipette verbindbar ist, ein elektrischer Strom fließen. Zudem weist die Pipettenspitze mindestens einen Bereich aus einer lichtdurchlässigem zweiten Kunststoffkomponente auf, der sich vom Durchgangskanal bis zur Außenseite des Körpers erstreckt. Hierdurch wird dem Anwender eine visuelle Überprüfung ermöglicht, ob die Pipettenspitze mit Flüssigkeit gefüllt ist oder nicht. Ggfs. kann die Füllmenge visuell kontrolliert werden. Außerdem kann die erfindungsgemäße Pipettenspitze kostengünstiger als herkömmliche elektrisch leitfähige Pipettenspitzen hergestellt werden, da sie mindestens einen lichtdurchlässigen Bereich aus Kunststoff aufweist, der ohne elektrisch leitfähiges Material ausgeführt sein kann.

Als elektrisch leitfähige Kunststoffkomponente können insbesondere Polymere wie Polypropylen mit einem leitfähigen Füllstoff (z.B. Leitruß, Kohlefasern, Karbonnanotubes, Metallpulver oder -fasern, niedrig schmelzende Legierungen) oder intrinsisch leitfähige Polymere (z.B. Polyanilin, Polythiophen oder Polypyrrol) eingesetzt werden. Als lichtdurchlässige Kunststoffkomponente kann insbesondere Polyolefin eingesetzt werden, z.B. Polypropylen oder Polyethylen. Bevorzugt enthalten die beiden Kunststoffkomponenten denselben Kunststoff, wodurch eine innige, stoffschlüssige Verbindung zwischen den beiden Kunststoffkomponenten gefördert wird.

Weiterhin bevorzugt werden ein elektrisch leitfähiges Polypropylen für den elektrisch leitfähigen Bereich und ein naturfarbenes Polypropylen für den lichtdurchlässigen Bereich eingesetzt.

Die im Mehrkomponenten-Spritzgußverfahren hergestellte Pipettenspitze kombiniert die Vorteile der für elektrisch leitfähige und nicht elektrisch leitfähige Pipettenspitzen eingesetzten Kunststoffe. Für die Herstellung der Pipettenspitze im Mehrkomponenten-Spritzgußverfahren kann grundsätzlich herkömmliche Verfahrenstechnik eingesetzt werden. Bevorzugt kommt ein Zweikomponenten-Spritzgußverfahren zum Einsatz.

Das Mehrkomponenten-Spritzgußverfahren kann auf verschiedene Weise ausgeführt werden. Beim Kernrückzug-Verfahren wird nach dem Spritzen und Erstarren der ersten Kunststoffkomponente durch Zurückziehen eines oder mehrerer Elemente eines Formnestes ein weiterer Hohlraum freigegeben, in den die zweite Kunststoffkomponente eingespritzt wird, wobei die Form aber geschlossen bleibt.

Beim Umsetz-Verfahren wird nach dem Spritzen und Erstarren der ersten Kunststoffkomponente diese bei geöffnetem Werkzeug in eine neue Kavität eingesetzt, die entsprechende Aussparungen für die zweite Kunststoffkomponente aufweist. Dies kann mit einem Handlingsystem geschehen, wobei die zweite Kavität im gleichen Werkzeug oder sogar in einer getrennten Form und auf einer zweiten Maschine liegen kann.

Eine Zwischenlösung ist das Umsetzen in Indexplatten-, Drehteller- oder Etagenwende-Werkzeugen, bei denen der Vorspritzling entweder auf dem Kern oder in dem Formnest der einen Formhälfte verbleibt und bei geöffnetem Werkzeug durch Drehung eines Werkzeugbereichs in eine zweite Kavität umgesetzt wird. Diese Lösung bedingt den Zusammenhalt des Vorspritzlings, der auf der Nadel verbleibt.

Ferner wird die Aufgabe durch eine leitfähige Pipettenspitze mit den Merkmalen des Anspruches 2 gelöst. Vorteilhafte Ausgestaltungen der Pipettenspitze sind in Unteransprüchen angegeben.

Gemäß Anspruch 2 hat eine elektrisch leitfähige Pipettenspitze einen länglichen, rohrförmigen Körper, der am unteren Ende eine untere Öffnung für den Durchgang von Flüssigkeit und am oberen Ende eine obere Öffnung für den Durchgang von Luft und einen Durchgangskanal zwischen der unteren Öffnung und der oberen Öffnung aufweist, und ist dadurch gekennzeichnet, dass auf dem Körper mehrere in Längsrichtung des Körpers sich erstreckende und in Umfangsrichtung des Körpers voneinander beabstandete Aufdrucke aus elektrisch leitfähigem Material angeordnet sind und der Körper zwischen den Aufdrucken lichtdurchlässige Bereiche aus Kunststoff aufweist, die sich vom Durchgangskanal bis zur Außenseite des Körpers erstrecken.

Bei dieser Pipettenspitze ist die Leitfähigkeit durch Aufdrucke aus elektrisch leitfähigem Material sichergestellt. Als Druckmaterialien können Leitlacke verwendet werden, die beispielsweise für die Herstellung von Antennen von Transpondern eingesetzt werden. Hierbei kann es sich insbesondere um Leitlacke handeln, die in einer Matrix z.B. aus einem Lösungsmittel leitfähige Teilchen aus Silber, Kupfer, Graphit, Ruß oder intrinsisch leitfähigen Polymeren (z.B. Polyanilin, Polythiophen oder Polypyrrol) enthalten. Dadurch, dass mehrere Aufdrucke vorhanden sind, kann eine Kontaktierung der Flüssigkeit bzw. eines Kontaktes an einer Pipette unabhängig von der Ausrichtung der Pipettenspitze zur Flüssigkeitsoberfläche bzw. zur Pipette erreicht werden. Ferner ist die Funktionssicherheit erhöht, da bei Beschädigungen nur eines Aufdruckes zumindest noch ein weiterer Aufdruck als elektrisch leitfähiger Bereich funktionsfähig ist. Des Weiteren können die Aufdrucke teilweise in Form einer Graduierung und/oder eines Schriftzuges und/oder eines Strichcodes und/oder eines anderen maschinenlesbaren Codes aufgebracht sein. Bei Aufbringung in Form einer Graduierung ist eine Bewertung des Füllstandshöhe möglich. Eine Aufbringung in Form eines Schriftzuges kann beispielsweise den Produktnamen, das maximale Volumen der Pipettenspitze, Informationen darüber, ob die Pipettenspitze mit oder ohne Filter ausgeführt ist, Verwendungshinweise und Hinweise auf eine spezielle Behandlung der Oberfläche der Pipettenspitze enthalten. Der maschinenlesbare Code kann beispielsweise ein Barcode sein und von einem Dosierautomaten lesbar und identifizierbar sein. Auch bei dieser Pipettenspitze ermöglichen die Bereiche aus lichtdurchlässigem Kunststoff eine visuelle Überprüfung des Füllzustandes. Außerdem ist auch diese Pipettenspitze kostengünstiger als herkömmliche elektrisch leitfähige Pipettenspitzen, da sie mit weniger elektrisch leitfähigem Material hergestellt werden können und ein zusätzlicher Aufwand für eine Produktbezeichnung oder dgl. nicht erforderlich ist.

Die erfindungsgemäße Pipettenspitze kann im Spritzgießverfahren aus einem lichtdurchlässigen Kunststoff hergestellt werden. Sie kann insbesondere aus einem Polyolefin hergestellt werden, z.B. aus Polypropylen oder Polyethylen. Die Pipettenspitze wird anschließend mit Aufdrucken versehen.

Die Aufdrucke können aufgebracht werden, indem die Pipettenspitzen zwischen einer Druckform und einem Druckzylinder hindurchgewälzt werden, wobei ihre Achsen parallel zu den Achsen der Druckform und des Druckzylinders ausgerichtet sind. Pipettenspitzen mit im Wesentlichen konischer oder einer anderen Kontur, die von einer Zylinderform abweicht, können mittels geneigtem Druckzylinder oder mittels profilierter Druckzylinder hergestellt werden. Auch können die Druckzylinder eine gewisse Elastizität haben, so dass auch parallel verlaufende Druckzylinder in Betracht kommen, auch wenn die Kontur der Pipettenspitze von einem Zylinder abweicht.

Ferner wird die Aufgabe durch eine leitfähige Pipettenspitze mit den Merkmalen des Anspruches 4 gelöst. Vorteilhafte Ausgestaltungen der Pipettenspitze sind in Unteransprüchen angegeben.

Die elektrisch leitfähige Pipettenspitze hat einen länglichen, rohrförmigen Körper, der am unteren Ende eine untere Öffnung für den Durchgang von Flüssigkeit und am oberen Ende eine obere Öffnung für den Durchgang von Luft und einen Durchgangskanal zwischen der unteren Öffnung und der oberen Öffnung aufweist, gekennzeichnet durch einen Körper aus lichtdurchlässigem Kunststoff und mindestens einem damit verbundenen Formkörper aus elektrisch leitfähigem Material.

Bei dieser Pipettenspitze wird die elektrische Leitfähigkeit durch den Formkörper aus elektrisch leitfähigem Material erreicht. Dieser ist beispielsweise eine Schraubenfeder aus leitfähigem Federstahl oder ein Streifen oder ein Drahtstück aus Kupfer oder einem anderen leitfähigem Material. Der Formkörper kann aber auch aus einem elektrisch leitfähigen Kunststoff bestehen. Die Herstellung dieser Pipettenspitze kann durch Einlegen des Formkörpers in eine Spritzgießform und zumindest teilweises Umspritzen des Formkörpers mit dem lichtdurchlässigen Kunststoff erfolgen. Dadurch, dass der Körper teilweise aus lichtdurchlässigem Kunststoff besteht, ist dennoch eine visuelle Kontrolle des Füllstands der Pipettenspitze gewährleistet.

Der Formkörper liegt zumindest an der unteren Öffnung und der oberen Öffnung des Körpers frei. Hierdurch wird gewährleistet, dass der Formkörper von einer Flüssigkeit benetzt wird, in die die Pipettenspitze eintaucht, und von einer Pipette, die mit der Pipettenspitze lösbar verbunden ist, kontaktiert wird. Der Formkörper ist zwischen der unteren Öffnung und der oberen Öffnung ganz oder teilweise in den lichtdurchlässigen Kunststoff des Körpers eingebettet Hierdurch kann der Formkörper fest mit der Pipettenspitze verbunden werden.

Der mindestens eine lichtdurchlässige Bereich kann transluzent sein, d.h. nur teilweise lichtdurchlässig, z.B. wie Milchglas. Er kann aber auch transparent sein, d.h. klar durchsichtig, z.B. wie Fensterglas. Bevorzugt ist der lichtdurchlässige Bereich zumindest in einem Ausmaß lichtdurchlässig, dass die Beobachtung eines Flüssigkeitsspiegels in der Pipettenspitze von außen ermöglicht.

Der elektrisch leitfähige Bereich oder die Aufdrucke oder der Formkörper aus elektrisch leitfähigem Material ist zumindest teilweise streifenförmig.

Gemäß einer weiteren Ausgestaltung weist der elektrisch leitfähige Streifen eine Breite von mindestens 1 mm auf. Dies ist insbesondere für die Herstellung der Spitzen im Zweikomponenten-Spritzgußverfahren vorteilhaft, da ein zu hoher Fließwiderstand vermieden wird.

Gemäß einer Ausgestaltung sind mehrere Abschnitte der elektrisch leitfähigen Bereiche oder die Aufdrucke oder mehrere Formkörper gleichmäßig über den Umfang des Körpers verteilt. Hierdurch können ungünstige Spannungsverteilung und ein Verzug der Pipettenspitze beim Spritzgießen vermieden werden. Dies ist insbesondere bei der Herstellung im Zweikomponenten-Spritzgießverfahren von Vorteil, aber auch beim Aufdrucken und beim Anspritzen oder Umspritzen eines Formkörpers.

Gemäß einer weiteren Ausgestaltung weist die Pipettenspitze an mindestens zwei einander diametral gegenüberliegenden Seiten des Körpers streifenförmige Abschnitte des elektrisch leitfähigen Bereiches oder Aufdrucke oder Formkörper auf. Hierdurch wird insbesondere die sichere Kontaktierung der Spritze durch die Pipette begünstigt.

Der elektrisch leitfähige Bereich oder die Aufdrucke oder der Formkörper ist bis zum unteren Ende und/oder bis zum oberen Ende des Körpers erstreckt. Die Erstreckung bis zum unteren Ende ermöglicht eine frühe Detektion des Eintauchens in Flüssigkeit. Die Erstreckung kann aber auch gezielt einen bestimmten Abstand vom unteren Ende haben, um zu gewährleisten, dass die Pipettenspitze tief genug in Flüssigkeit eingetaucht ist, um eine bestimmte Flüssigkeitsmenge zu entnehmen. Die Erstreckung bis zum oberen Ende des Körpers begünstigt Kontaktierung des elektrisch leitfähigen Bereichs oder der Aufdrucke oder des Formkörpers durch einen Kontakt einer Dosiervorrichtung.

Der elektrisch leitfähige Bereich oder die Aufdrucke oder der Formkörper weist mindestens einen Ring und/oder ein Ringsegment auf, der oder das sich in Umfangsrichtung des Körpers erstreckt. Durch den Ring und/oder das Ringsegment können in Umfangsrichtung des Formkörpers voneinander beabstandete Abschnitte des elektrisch leitfähigen Bereiches oder voneinander beabstandete Aufdrucke oder voneinander beabstandete Formkörper elektrisch leitend miteinander verbunden werden. Ferner kann durch den Ring und/oder das Ringsegment die Kontaktierung der Flüssigkeit und/oder eines Kontaktes an einer Dosiervorrichtung unabhängig von der Ausrichtung der Pipettenspitze sichergestellt werden. Der Ring und/oder das Ringsegment erstreckt sich um das untere Ende und/oder um das obere Ende der Pipettenspitze.

Die Kontaktierung in Umfangsrichtung voneinander beabstandeter Aufdrucke oder Formkörper kann aber auch durch eine geeignet ausgebildete Kontakteinrichtung der Pipette sichergestellt werden, die in Umfangsrichtung mehrere Positionen abtastet. Diese kann beispielsweise eine Schraubenfeder sein, die nach der Art einer Schlauchfeder ringförmig gebogen ist.

Gemäß einer weiteren Ausgestaltung ist der lichtdurchlässige Kunststoff naturfarbenes Polypropylen. Gemäß einer weiteren Ausgestaltung ist der elektrisch leitfähige Kunststoff ein Leitruß enthaltendes Polypropylen-Compound.

Der elektrisch leitfähige Bereich kann ausschließlich an der Außenseite oder ausschließlich an der Innenseite der Pipettenspitze angeordnet sein. Er kann aber auch sowohl an der Außenseite als auch an der Innenseite der Pipettenspitze angeordnet sein. Eine elektrisch leitfähige Beschichtung ist bevorzugt an der Außenseite der Pipettenspitze angeordnet. Bei Herstellung der Pipettenspitze im Zweikomponenten-Spritzgußverfahren ist der elektrisch leitfähige Bereich bevorzugt ein Abschnitt der Wand des Körpers, der sich vom Durchgang bis zur Außenseite des Körpers erstreckt.

Der elektrisch leitfähige Bereich oder die Aufdrucke oder der Formkörper hat bevorzugt zwischen seinen in Längsrichtung des Körpers entfernten Enden einen Widerstand von maximal 30 kOhm. Marktübliche Dosiergeräte, die mit elektrisch leitfähigen Pipettenspitzen zusammenarbeiten sind ausgelegt, mit elektrisch leitfähigen Pipettenspitzen zusammenzuarbeiten, zwischen dem unteren Ende und dem oberen Ende die einen Widerstand von maximal 30 kOhm haben. Die Pipettenspitze ist bevorzugt auf solche Geräte ausgelegt.

Eine Pipette zum Gebrauch einer elektrisch leitfähigen Pipettenspitze oder einer ihrer Ausgestaltungen weist bevorzugt ein Gehäuse auf, das an einem unteren Ende einen Sitz einer Pipettenspitze aufweist, in dem die Durchgangsöffnung für Luft angeordnet ist, die über einen im Gehäuse angeordneten Verbindungskanal mit einer im Gehäuse angeordneten Verdrängungseinrichtung für Luft verbunden ist, wobei dem Sitz ein Kontakt zum Kontaktieren eines elektrisch leitfähigen Bereichs der Pipettenspitze zugeordnet ist.

Der Kontakt kann insbesondere ein Sitz für die Pipettenspitze aus elektrisch leitfähigem Material sein. Der Kontakt kann sich aber auch in der Nähe des Sitzes befinden. Gemäß einer Ausgestaltung ist der Kontakt ein Federkontakt, der durch eine auf dem Sitz angeordnete Pipettenspitze elastisch verformbar ist.

Die Erfindung wird nachfolgend anhand der anliegenden Zeichnungen von Ausführungsbeispielen näher erläutert. In den Zeichnungen zeigen:
- Fig. 1: eine im Zweikomponenten-Spritzgußverfahren hergestellte Pipettenspitze in einer Perspektivansicht schräg von der Seite;
- Fig. 2: eine andere im Zweikomponenten-Spritzgußverfahren hergestellte Pipettenspitze in einer Perspektivansicht schräg von der Seite;
- Fig. 3: dieselbe Pipettenspitze in der Unteransicht;
- Fig. 4: eine mit einem Aufdruck aus elektrisch leitfähigem Material versehene Pipettenspitze in einer Perspektivansicht schräg von der Seite;
- Fig. 5: eine mit einer Schraubenfeder versehene Pipettenspitze in einem Längsschnitt.

In der vorliegenden Anmeldung beziehen sich die Angaben "oben" und "unten" auf die bevorzugte Ausrichtung der Pipettenspitze beim Gebrauch, bei der die Pipettenspitze mit ihrem Körper vertikal ausgerichtet ist und die untere Öffnung unten und die obere Öffnung oben angeordnet ist.

Bei der nachfolgenden Erläuterung verschiedener Ausführungsbeispiele werden mit denselben Begriffen bezeichnete Teile mit denselben Bezugsziffern versehen, wobei die verschiedenen Ausführungsbeispiele durch einen nachgestellten Punkt und verschiedene Ziffern hinter dem Punkt unterschieden sind.

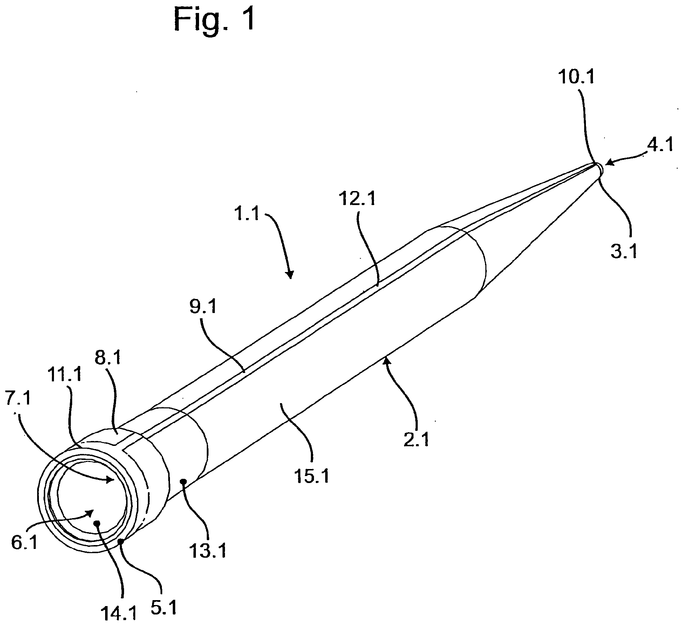

Gemäß Fig. 1 hat eine im Zweikomponenten-Spritzgießverfahren hergestellte Pipettenspitze 1.1 einen rohrförmigen Körper 2.1, der am unteren Ende 3.1 eine untere Öffnung 4.1 für den Durchgang von Flüssigkeit am oberen Ende 5.1 eine obere Öffnung 6.1 für den Durchgang von Luft und einen Durchgangskanal 7.1 zwischen der unteren Öffnung 4.1 und der oberen Öffnung 6.1 aufweist.

An der unteren Öffnung 4.1 hat die Pipettenspitze 1.1 ihren kleinsten Querschnitt und an der oberen Öffnung 5.1 ihren größten. Von der unteren Öffnung 4.1 zur oberen Öffnung 5.1 nimmt generell der Querschnitt der Pipettenspitze 1.1 zu, wobei diese Querschnittszunahme allmählich und/oder in Stufen erfolgen kann. Am oberen Ende 5.1 hat die Pipetten spitze 1.1 einen Bund 8.1, d.h. einen radial nach außen vorstehenden Vorsprung.

Der Körper 2.1 der Pipettenspitze 1.1 hat einen in Axialrichtung vom unteren zum oberen Ende verlaufenden, streifenförmigen Abschnitt 9.1 eines Bereichs aus elektrisch leitfähigem Material. Ferner hat er am unteren Ende 9.1 und am oberen Ende 5.1 jeweils einen ringförmigen Abschnitt 10.1, 11.1 eines Bereichs 12.1 aus elektrisch leitfähigem Material. Die Abschnitte 9.1, 10.1, 11.1 des elektrisch leitfähigen Bereiches 12.1 sind in Ausnehmungen an der Außenseite 13.1 der Pipettenspitze 1.1 hineingespritzt. Dies ermöglicht die Herstellung in einem Umsetz-verfahren, bei dem zunächst der Spritzenkörper 2.1 mit den Ausnehmungen spritzgegossen, dann umgesetzt und danach der elektrisch leitfähige Bereich 12.1 spritzgegossen wird.

Die Pipettenspitze 1.1 ist folglich an der Innenseite 14.1 nicht elektrisch leitfähig. Sie kann jedoch von einer Pipette kontaktiert werden, beispielsweise indem ein Kontakt an den stirnseitigen Rand des ringförmigen Abschnittes 11.1 des leitfähigen Bereiches 12.1 angepresst wird.

Der Körper 2.1 der Pipettenspitze 1.1 ist z.B. aus lichtdurchlässigem, naturfarbenem Polypropylen spritzgegossen. In den Abschnitt 9.1, 10.1, 11.1 des elektrisch leitfähigen Bereiches 12.1 ist er z.B. aus einem ein Leitruß enthaltenden Polypropylen-Compound spritzgegossen. Die übrigen Bereich der Pipettenspitze 1.1 sind lichtdurchlässige Bereiche 15.1, die sich vom Durchgangskanal 7.1 bis zur Außenseite 12.1 erstrecken.

Somit ist eine elektrisch leitfähige Verbindung zwischen dem unteren Ende 3.1 und dem oberen Ende 5.1 der Pipettenspitze 1.1 gewährleistet. Dennoch kann ein Flüssigkeitsspiegel in der Pipettenspitze 1.1 durch die lichtdurchlässigen Bereiche 14.1 aus naturfarbenem PP beobachtet werden.

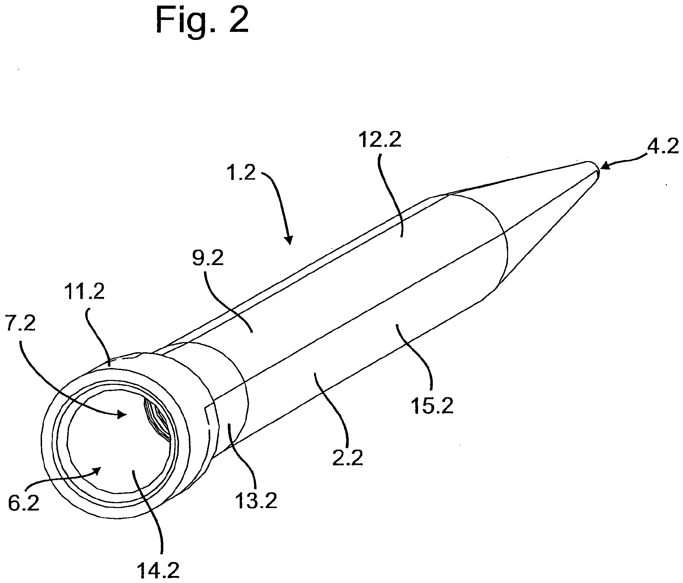

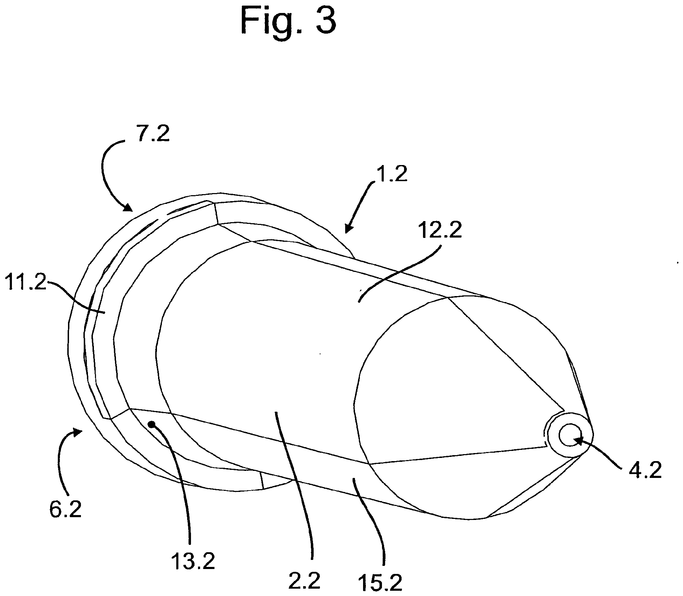

Die Pipettenspitze 1.1 gemäß Fig. 2 und 3 unterscheidet sich von der vorbeschriebenen dadurch, dass der streifenförmige Abschnitt 9.2 breiter als der Abschnitt 9.1 ausgeführt ist. Der elektrisch leitfähige Bereich 12.2 weist am unteren Ende keinen ringförmigen Abschnitt auf. Der ringförmige Abschnitt 11.2 verläuft von der Außenseite 13.2 der Pipettenspitze 1.2 über den Rand der Öffnung 6.2 zur Innenseite 14.2 hin, so dass die Pipettenspitze 1.2 auch von einem Ansatz aus elektrisch leitfähigem Material einer Pipette kontaktiert werden kann, auf den sie aufgesteckt wird. Ferner gewährleistet die Erstreckung des ringförmigen Abschnittes 11.2 um den äußeren Rand der Öffnung 6.2 und die Anordnung des streifenförmigen Abschnittes 9.2 in einer nutartigen Vertiefung, dass der Körper 2.2 nach dem Spritzgießen in eine andere Form umgesetzt werden kann, in der dann der leitfähige Bereich 12.2 spritzgegossen wird.

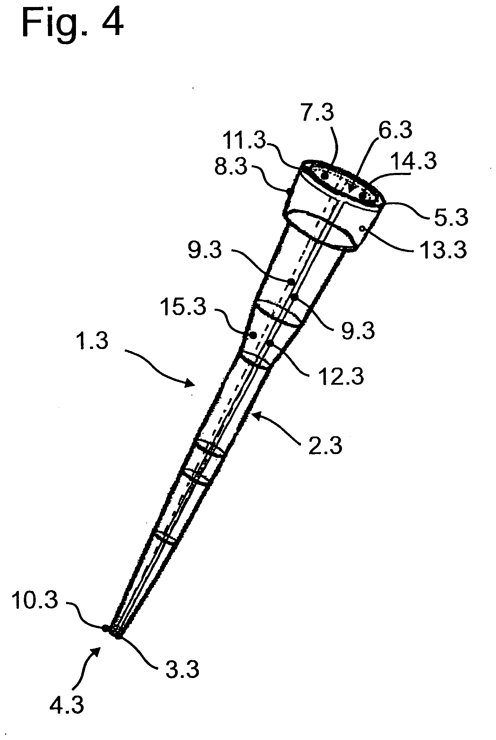

Die Pipettenspitze 3.3 von Fig. 4 unterscheidet sich von der zuvor beschriebenen dadurch, dass die elektrisch leitfähigen Bereiche 9.3, 10.3, 11.3 von einem elektrisch leitfähigen Aufdruck auf der Außenseite des Körpers 2.3 gebildet ist. Außerdem sind die streifenförmigen Bereiche 9.3 an zwei diametral einander gegenüberliegenden Positionen der Außenseite 12.3 vorhanden. Die übrigen Bereiche des Körpers 2.3 sind lichtdurchlässige Bereiche 14.3, z.B. aus naturfarbenem PP.

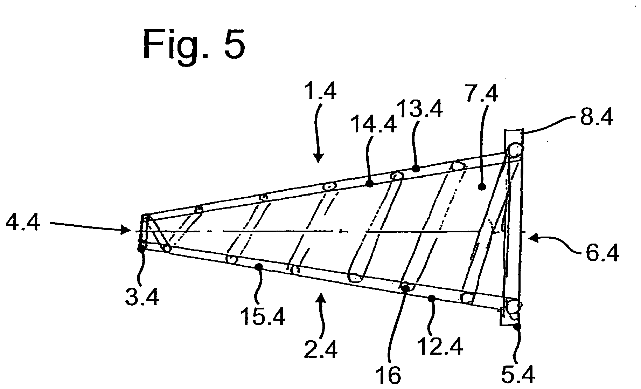

Die Pipettenspitze 1.4 von Fig. 5 hat einen Körper 2.4, der eine Schraubenfeder 16 aus Federstahl umfasst, die teilweise von einem lichtdurchlässigen Kunststoff, z.B. aus naturfarbenem PP, umspritzt ist und den elektrisch leitfähigen Bereich bildet. Die Schraubenfeder 15 erstreckt sich vom unteren Ende 3.4 zum oberen Ende 5.4 und liegt zumindest am unteren Ende 3.4 und am oberen Ende 5.4 frei, um eine Kontaktierung zu gewährleisten. Durch die lichtdurchlässigen Bereiche 15.4 zwischen den Windungen der Schraubenfeder 16 kann von außen ein Flüssigkeitsspiegel im Durchgangskanal 7.4 innerhalb der Pipettenspitze 1.4 beobachtet werden.

## Patentansprüche

1. Elektrisch leitfähige Pipettenspitze mit einem länglichen, rohrförmigen Körper (2), der am unteren Ende (3) eine untere Öffnung (4) für den Durchgang von Flüssigkeit und am oberen Ende (5) eine obere Öffnung (6) für den Durchgang von Luft und einen Durchgangskanal (7) zwischen der unteren Öffnung (3) und der oberen Öffnung (4) aufweist, wobei der Körper (2) einen zusammenhängenden und sich in Längsrichtung des rohrförmigen Körpers (2) erstreckenden, elektrisch leitfähigen Bereich (9 bis 11) aus einer elektrisch leitfähigen ersten Kunststoffkomponente aufweist und der elektrisch leitfähige Bereich (9 bis 11) zumindest teilweise streifenförmig ist, **dadurch gekennzeichnet, dass** der elektrisch leitfähige Bereich (9 bis 11) zusätzlich mindestens einen Ring (10, 11) und/oder ein Ringsegment umfasst, der oder das sich in Umfangsrichtung um das obere Ende (4) und/oder um das untere Ende (3) des Körpers (2) erstreckt, und mindestens einen transparenten oder transluzenten Bereich (15) aus einer weiteren Kunststoffkomponente aufweist, der sich vom Durchgangskanal (7) bis zur Außenseite (13) des Körpers (2) erstreckt, und der Körper im Mehrkomponenten-Spritzgußverfahren hergestellt ist.

2. Elektrisch leitfähige Pipettenspitze mit einem länglichen, rohrförmigen Körper (2), der am unteren Ende (3) eine untere Öffnung (4) für den Durchgang von Flüssigkeit und am oberen Ende (5) eine obere Öffnung (6) für den Durchgang von Luft und einen Durchgangskanal (7) zwischen der unteren Öffnung (3) und der oberen Öffnung (4) aufweist, wobei auf dem Körper (2) mehrere in Längsrichtung des Körpers sich erstreckende und in Umfangsrichtung des Körpers (2) voneinander beabstandete Aufdrucke (12.3) aus elektrisch leitfähigem Material angeordnet sind und die Aufdrucke (12.3) zumindest teilweise streifenförmig sind, **dadurch gekennzeichnet, dass** die Aufdrucke (12.3) zusätzlich mindestens einen Ring (10, 11) und/oder ein Ringsegment umfassen, der oder das sich in Umfangsrichtung um das obere Ende (4) und/oder um das untere Ende (3) des Körpers (2) erstreckt, der Ring (10, 11) und/oder das Ringsegment verschiedene in Umfangsrichtung des Körpers (2) voneinander beabstandete Abschnitte der Aufdrucke (12.3) elektrisch leitend miteinander verbindet und der Körper (2) zwischen den Aufdrucken transparente oder transluzente Bereiche (15) aus Kunststoff aufweist, die sich vom Durchgangskanal (7) bis zur Außenseite (13) des Körpers (2) erstrecken.

3. Pipettenspitze nach Anspruch 2, bei der die Aufdrucke (12.3) zumindest teilweise in Form einer Graduierung und/oder eines Schriftzuges und/oder eines Strichcodes und/oder eines anderen maschinenlesbaren Codes aufgebracht sind.

4. Elektrisch leitfähige Pipettenspitze mit einem länglichen, rohrförmigen Körper (2), der am unteren Ende (3) eine untere Öffnung (4) für den Durchgang von Flüssigkeit und am oberen Ende (5) eine obere Öffnung (6) für den Durchgang von Luft und einen Durchgangskanal (7) zwischen der unteren Öffnung (3) und der oberen Öffnung (4) aufweist, umfassend einen Körper (7) aus transparentem oder transluzentem Kunststoff und mindestens einen damit verbundenen Formkörper (16) aus elektrisch leitfähigem Material, wobei der Formkörper (16) sich in Längsrichtung erstreckt und zumindest teilweise streifenförmig ist, **dadurch gekennzeichnet, dass** der Formkörper (16) zusätzlich mindestens einen Ring (10, 11) und/oder ein Ringsegment umfasst, der oder das sich in Umfangsrichtung um das obere Ende (4) und/oder um das untere Ende (3) des Körpers (2) erstreckt, und der Formkörper (16) zumindest an der unteren Öffnung (3) und der oberen Öffnung (4) des Körpers (7) freiliegt und zwischen der unteren Öffnung (3) und der oberen Öffnung (4) ganz oder teilweise in den lichtdurchlässigen Kunststoff des Körpers (7) eingebettet ist.

5. Pipettenspitze nach Anspruch 4, bei der der Formkörper (16) eine Schraubenfeder ist.

6. Pipettenspitze nach einem der Ansprüche 1 bis 5, bei der der streifenförmige Bereich oder die streifenförmigen Aufdrucke (12.3) oder der streifenförmige Formkörper (16) eine Breite von mindestens 1 mm aufweist.

7. Pipettenspitze nach einem der Ansprüche 1 bis 6, bei der die elektrisch leitfähigen Bereiche (12.1, 12.2) oder Aufdrucke (12.3) oder Formkörper (16) gleichmäßig über den Umfang des Körpers verteilt sind.

8. Pipettenspitze nach Anspruch 7, die an mindestens zwei einander diametral gegenüberliegenden Seiten des Körpers (7) elektrisch leitfähige Bereiche (12.1, 12.2) oder Aufdrucke (12.3) oder Formkörper (16) aufweist.

9. Pipettenspitze nach einem der Ansprüche 1 bis 8, bei der der Ring (10, 11) und/oder das Ringsegment verschiedene in Umfangsrichtung des Körpers (2) voneinander beabstandete Abschnitte des elektrisch leitfähigen Bereiches (12.1, 12.2) oder Formkörpers (16) oder des Aufdruckes elektrisch leitend miteinander verbindet.

10. Pipettenspitze nach einem der Ansprüche 1 bis 9, bei der der transparente oder transluzente Kunststoff naturfarbenes Polypropylen ist.

11. Pipettenspitze nach Anspruch 1 oder einem der Ansprüche 6 bis 10, bei der der elektrisch leitfähige Kunststoff ein Leitruß enthaltendes Polypropylen-Compound ist.

12. Pipettenspitze nach Anspruch 1 oder einem der Ansprüche 6 bis 11, die den elektrisch leitfähigen Bereich an der Außenseite (13) und/oder an der Innenseite (14) hat.

## Claims

1. An electrically conductive pipette tip having an elongated tubular body (2) that has a bottom opening (4) at the bottom end (3) for the passage of liquid, and a top opening (6) at the top end (5) for the passage of air, and a passageway (7) between the bottom opening (3) and the top opening (4), wherein the body (2) has a continuous, electrically conductive region (9 to 11) extending in the longitudinal direction of the tubular body (2) consisting of an electrically conductive first plastic component and the electrically conductive region (9 to 11) is at least partially strip-shaped, **characterized in that** the electrically conductive region (9 to 11) additionally comprises at least one ring (10, 11) and/or a ring segment that extends in the peripheral direction around the top end (4) and/or around the bottom end (3) of the body (2), and has at least one transparent or translucent region (15) consisting of another plastic component that extends from the passageway (7) to the outside (13) of the body (2), and the body is manufactured in a multi-component injection molding process.

2. An electrically conductive pipette tip having an elongated tubular body (2) that has a bottom opening (4) at the bottom end (3) for the passage of liquid, and a top opening (6) at the top end (5) for the passage of air, and a passageway (7) between the bottom opening (3) and the top opening (4), wherein a plurality of printings (12.3) consisting of electrically conductive material extending in the longitudinal direction of the body and spaced apart from one another in the peripheral direction of the body (2) are arranged on the body (2) and the printings (12.3) are at least partially strip-shaped, **characterized in that** the printings (12.3) additionally comprise at least one ring (10, 11) and/or a ring segment that extends in the peripheral direction around the top end (4) and/or around the bottom end (3) of the body (2), the ring (10, 11) and/or the ring segment connects different sections of the printings (12.3) spaced apart from each other in the peripheral direction of the body (2) in an electrically conductive manner and the body (2) has between the printings transparent or translucent regions (15) consisting of plastic that extend from the passageway (7) to the outside (13) of the body (2).

3. The pipette tip according to Claim 2, in which the printings (12.3) are at least partially applied in the form of a graduation and/or lettering and/or a barcode and/or another machine-readable code.

4. An electrically conductive pipette tip having an elongated tubular body (2) that has a bottom opening (4) at the bottom end (3) for the passage of liquid, and a top opening (6) at the top end (5) for the passage of air, and a passageway (7) between the bottom opening (3) and the top opening (4), comprising a body (7) consisting of transparent or translucent plastic and at least one molded body (16) consisting of electrically conductive material connected thereto, wherein the molded body (16) extends in the longitudinal direction and is at least partially strip-shaped, **characterized in that** the molded body (16) additionally comprises at least one ring (10, 11) and/or a ring segment that extends in the peripheral direction around the top end (4) and/or around the bottom end (3) of the body (2), and the molded body (16) is exposed at least at the bottom opening (3) and the top opening (4) of the body (7) and is wholly or partially embedded in the light-permeable plastic of the body (7) between the bottom opening (3) and the top opening (4).

5. The pipette tip according to Claim 4, in which the molded body (16) is a helical spring.

6. The pipette tip according to any one of Claims 1 to 5, in which the strip-shaped region or the strip-shaped printings (12.3) or the strip-shaped molded body (16) is/are at least 1 mm wide.

7. The pipette tip according to any one of Claims 1 to 6, in which the electrically conductive regions (12.1, 12.2) or printings (12.3) or molded bodies (16) are evenly distributed over the perimeter of the body.

8. The pipette tip according to Claim 7, which has electrically conductive regions (12.1, 12.2) or printings (12.3) or molded bodies (16) on at least two diametrically opposing sides of the body (7).

9. The pipette tip according to any one of Claims 1 to 8, in which the ring (10, 11) and/or the ring segment connects different sections of the electrically conductive region (12.1, 12.2) or molded body (16) or of the printing (12.3) that are spaced apart from one another in the peripheral direction of the body (2) in an electrically conductive manner.

10. The pipette tip according to any one of Claims 1 to 9, in which the transparent or translucent plastic is natural colored polypropylene.

11. The pipette tip according to Claim 1 or any one of Claims 6 to 10, in which the electrically conductive plastic is a polypropylene compound containing a conductive carbon black.

12. The pipette tip according to Claim 1 or any one of Claims 6 to 11, which has the electrically conductive region on the outside (13) and/or on the inside (14).

## Revendications

1. Pointe de pipette électro-conductrice comprenant un corps tubulaire oblong (2) présentant une ouverture inférieure (4) à l'extrémité inférieure (3), pour le passage de liquide, et une ouverture supérieure (6) à l'extrémité supérieure (5), pour le passage de l'air, ainsi qu'un canal de passage (7) entre l'ouverture inférieure (3) et l'ouverture supérieure (4), dans laquelle le corps (2) présente une région électro-conductrice (9 à 11) continue, s'étendant dans la direction longitudinale du corps tubulaire (2), constituée d'un premier composant plastique électro-conducteur, et la région électro-conductrice (9 à 11) est au moins partiellement en forme de bande, **caractérisée en ce que** la région électro-conductrice (9 à 11) comporte en outre au moins un anneau (10, 11) et/ou un segment annulaire, lequel s'étend dans la direction circonférentielle autour de l'extrémité supérieure (4) et/ou de l'extrémité inférieure (3) du corps (2), et présente au moins une région transparente ou translucide (15) constituée d'un autre composant plastique, laquelle s'étend à partir du canal de passage (7) jusqu'au côté extérieur (13) du corps (2), et le corps est fabriqué à l'aide d'un procédé de moulage par injection à plusieurs composants.

2. Pointe de pipette électro-conductrice comprenant un corps tubulaire oblong (2) présentant une ouverture inférieure (4) à l'extrémité inférieure (3), pour le passage de liquide, et une ouverture supérieure (6) à l'extrémité supérieure (5), pour le passage de l'air, ainsi qu'un canal de passage (7) entre l'ouverture inférieure (3) et l'ouverture supérieure (4), dans laquelle plusieurs impressions (12.3) espacées les unes des autres dans la direction circonférentielle du corps (2), constituées d'un matériau électro-conducteur et s'étendant dans la direction longitudinale du corps sont disposées sur le corps (2), et les impressions (12.3) sont au moins partiellement en forme de bande, **caractérisée en ce que** les impressions (12.3) comportent en outre au moins un anneau (10, 11) et/ou un segment annulaire, lequel s'étend dans la direction circonférentielle autour de l'extrémité supérieure (4) et/ou de l'extrémité inférieure (3) du corps (2), l'anneau (10, 11) et/ou le segment annulaire relie entre elles de façon électro-conductrice différentes sections des impressions (12.3) espacées les unes des autres dans la direction circonférentielle du corps (2), et le corps (2) présente des régions transparentes ou translucides (15) en plastique entre les impressions, lesquelles s'étendent à partir du canal de passage (7) jusqu'au côté extérieur (13) du corps (2).

3. Pointe de pipette selon la revendication 2, dans laquelle les impressions (12.3) sont appliquées au moins partiellement sous la forme d'une graduation et/ou d'une inscription et/ou d'un code-barres et/ou d'un autre code lisible par machine.

4. Pointe de pipette électro-conductrice comprenant un corps tubulaire oblong (2) présentant une ouverture inférieure (4) à l'extrémité inférieure (3), pour le passage de liquide, et une ouverture supérieure (6) à l'extrémité supérieure (5), pour le passage de l'air, ainsi qu'un canal de passage (7) entre l'ouverture inférieure (3) et l'ouverture supérieure (4), comportant un corps (7) constitué d'un plastique transparent ou translucide et au moins un corps moulé (16) relié à celui-ci, constitué d'un matériau électro-conducteur, dans laquelle le corps moulé (16) s'étend dans la direction longitudinale et se présente au moins partiellement sous la forme d'une bande, **caractérisée en ce que** le corps moulé (16) comporte en outre au moins un anneau (10, 11) et/ou un segment annulaire s'étendant dans la direction circonférentielle autour de l'extrémité supérieure (4) et/ou de l'extrémité inférieure (3) du corps (2), et le corps moulé (16) est exposé au moins au niveau de l'ouverture inférieure (3) et de l'ouverture supérieure (4) du corps (7) et enrobé complètement ou partiellement dans le plastique transparent du corps (7) entre l'ouverture inférieure (3) et l'ouverture supérieure (4).

5. Pointe de pipette selon la revendication 4, dans laquelle le corps moulé (16) est un ressort hélicoïdal.

6. Pointe de pipette selon l'une des revendications 1 à 5, dans laquelle la région en forme de bande ou les impressions (12.3) en forme de bandes ou le corps moulé (16) en forme de bande présente/présentent une largeur d'au moins 1 mm.

7. Pointe de pipette selon l'une des revendications 1 à 6, dans laquelle les régions électro-conductrices (12.1, 12.2) ou les impressions (12.3) ou les corps moulés (16) sont répartis de façon régulière sur le pourtour du corps.

8. Pointe de pipette selon la revendication 7, laquelle présente des régions électro-conductrices (12.1, 12.2) ou impressions (12.3) ou corps moulés (16) sur au moins deux côtés diamétralement opposés du corps (7).

9. Pointe de pipette selon l'une des revendications 1 à 8, dans laquelle l'anneau (10, 11) et/ou le segment annulaire relie entre elles de façon électro-conductrice différentes sections de la région électro-conductrice (12.1, 12.2) ou du corps moulé (16) ou de l'impression, lesquelles sont espacées les unes des autres dans la direction circonférentielle du corps (2).

10. Pointe de pipette selon l'une des revendications 1 à 9, dans laquelle le plastique transparent ou translucide est un polypropylène de couleur naturelle.

11. Pointe de pipette selon la revendication 1 ou l'une des revendications 6 à 10, dans laquelle le plastique électro-conducteur est un composé de polypropylène contenant de la suie conductrice.

12. Pointe de pipette selon la revendication 1 ou l'une des revendications 6 à 11, laquelle possède la région électro-conductrice sur le côté extérieur (13) et/ou le côté intérieur (14).
